# EUROPÄISCHE PATENTSCHRIFT

(11) **EP 2 082 472 B1**
(45) Veröffentlichungstag und Bekanntmachung des Hinweises auf die Patenterteilung: **10.10.2012**
(21) Anmeldenummer: 07818865.3
(22) Anmeldetag: 10.10.2007
(51) Int. Cl.: H02K 3/52

(54) **ELEKTROMOTOR**
ELECTRIC MOTOR
MOTEUR ÉLECTRIQUE

(30) Priorität: 14.10.2006 DE 202006016357 U
(43) Veröffentlichungstag der Anmeldung: 29.07.2009
(73) Patentinhaber: ebm-papst St. Georgen GmbH & Co. KG, 78112 St. Georgen (DE)
(72) Erfinder: ALTINDIS, Ismail, 78120 Furtwangen (DE)
(74) Vertreter: Raible, Tobias
(86) Internationale Anmeldenummer: PCT/EP2007/008792
(87) Internationale Veröffentlichungsnummer: WO 2008/043534

(56) Entgegenhaltungen:
- WO-A-03/081755
- WO-A-2006/050765
- WO-A-2006/103194
- DE-A1- 10 229 606
- DE-A1- 19 740 938
- DE-A1-102004 060 084
- DE-A1-102004 062 816
- DE-U1- 20 321 303
- JP-A- 8 182 236
- US-A- 5 635 781
- US-B1- 6 356 005

## Beschreibung

Die Erfindung betrifft einen Elektromotor mit einem Stator, der eine Wicklungsanordnung trägt, welche zur Erzeugung eines Drehfelds ausgebildet ist.

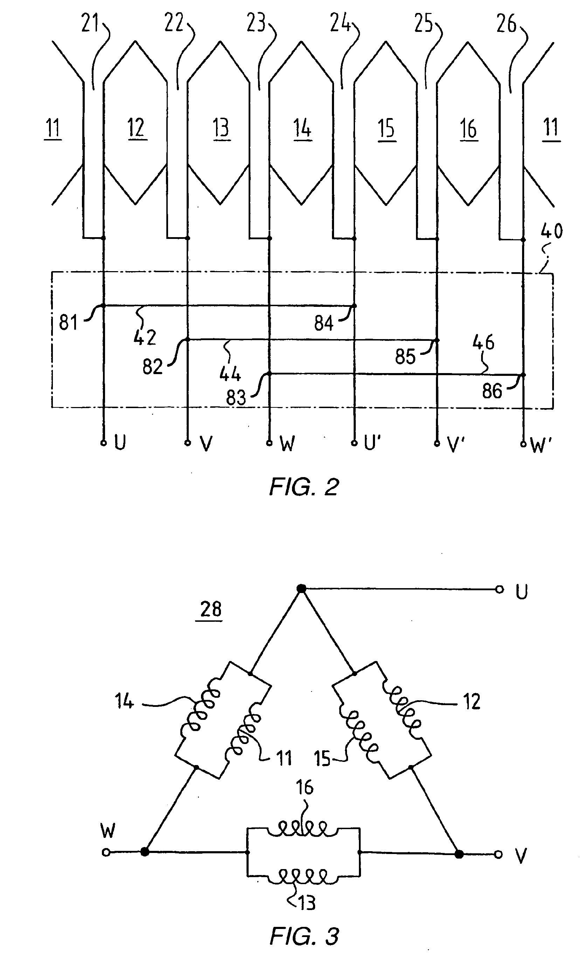

Ein Dreiphasenmotor (Drehstrommotor) kann in Sternschaltung (Y-Schaltung) und in Dreieckschaltung betrieben werden. Wenn bei einer Sternschaltung die Einzelwicklungen jeder Phase in Serie geschaltet sind, bezeichnet man das als Stern-Reihe-Schaltung, und wenn zwei Einzelwicklungen pro Phase parallel geschaltet werden, bezeichnet man das als Stern-Doppelparallel-Schaltung. Werden vier Einzelwicklungen parallel geschaltet, so bezeichnet man das als Stern-Vierfachparallel-Schaltung. Analog spricht man von einer Dreieck-Reihen-Schaltung und einer Dreieck-Doppelparallel-Schaltung, vgl. Fig. 3, oder von einer Dreleck-Vierfachparaliel-Schaltung.

Zur Herstellung solcher unterschiedlicher Schaltungen müssen die Wicklungsenden der Einzelspulen in verschiedener Weise miteinander verbunden werden. Z.B. werden beim Motor nach der US 6 177 741 B1, dessen Stator mit einer Sternschaltung versehen ist, die Enden der lackierten Kupferdrähte durch Löt oder Crimpverbindungen mit den Enden von flachen Leiterbahnen verbunden, die auf einer isolierenden Platte befestigt sind. Eine dieser Leiterbahnen dient als Sternpunktverbindung, und drei andere Leiterbahnen dienen als Anschlüsse für die Phase U, V und W.

Die JP 08-182 236 A zeigt in Fig. 1 bis 3 einen Drehstrommotor mit einer Drehachse, einem Rotor und einem Stator mit einer Sternschaltung. Der Sternpunkt, den man Englisch als neutralen Punkt bezeichnet, ist dort teilweise mit Tn bezeichnet. Jede Phase dieses Motors hat zwei parallel geschaltete Stränge, von denen jeweils ein Ende mit dem Sternpunkt Tn und ein gegenüberliegendes Ende mit einem der nicht neutralen Anschlüsse Tu, Tv und Tw verbunden ist. Die Anschlüsse Tu, Tv, Tw sind an einem Umguss des Stators befestigt. Der Anschluss an der Seite des nicht neutralen Punkts der Wicklung ist mit der gedruckten Verschaltung auf der Leiterplatte verbunden.

Bei Fig. 1 und 2 dieser Schrift ist die gesamte Wicklung, also alle drei Phasen, durchgehend in einem einzigen Stück gewickelt, d.h. sie hat nur noch die äußeren Anschlüsse Tu, Tv, Tw sowie den Sternpunkt Tn, was eine Menge manuelle Arbeit spart.

Mechanisch hat dieser bekannte Motor einen Aufbau mit einem Flansch, der nach Art eines ringförmigen Troges ausgebildet ist, in dessen Mitte sich ein Lagerrohr befindet. Die Oberseite des ringförmigen Troges ist durch eine Leiterplatte abgedeckt, die ihrerseits am Stator des Motors befestigt ist. In dieser Leiterplatte befindet sich ein Loch, und durch dieses ragt ein Stift für den Sternpunkt, welcher Stift am Wickelkörper des Stators befestigt ist. Um diesen Stift sind die Wicklungsdrähte gewickelt und mit dem Stift verlötet.

Die WO 2006/103 194 A2 befasst sich mit der Herstellung eines Innenstators aus einem inneren Teil und einem äußeren Ring. Auf das innere Teil werden bewickelte Spulenkörper aufgesetzt, die an einer Stirnseite mit elektrischen Anschlüssen versehen sind. Auf diese wird ein Stanzgitter aufgesetzt, und die Anschlüsse werden durch Schweißen mit dem Stanzgitter verbunden.

Die US 5 635 781 betrifft einen Innenstator mit ausgeprägten Polen. Die Wicklungen sind mit starren Anschlussstiften versehen. Diese werden bei der Montage in Hülsen gesteckt.

Die DE 197 40 938 A1 betrifft einen Innenstator mit ausgeprägten Polen. Die Wicklungsdrähte werden mit Anschlusskontakten verbunden und verschweißt. Die Anschlusskontakte sind an einem speziellen Teil befestigt, das zusammen mit dem Wickelkörper hergestellt ist. Die Anschlusskontakte haben oben Fortsätze, die "durch Verlöten" mit einem Stanzgitter verbunden sind.

Die DE 10 2004 060 084 A1 betrifft ein Anschlusselement für Leiterplatten für hohe Ströme, das auch als Kühlkörper dienen kann. An einem Ende hat es ein Schraubgewinde, und am anderen Ende zwölf Pressfits.

Die DE 203 21 303 U1 befasst sich mit einem Leiterplattenanschluss und hat eine langen Montageabschnitt, der sich nur für spezielle Anwendungen eignet.

Die DE 102 29 606 A1 betrifft einen Stellantrieb, nämlich einen Fensterheber. Eine Leiterplatte hat eine Einpresszone, in der ein Stift eingepresst wird.

Die WO 03/081 755 A1 zeigt Kontaktelemente, die "durch Löten, Heißpressen oder durch Ultraschallschweißen" elektrisch verbunden werden.

Es ist deshalb eine Aufgabe der Erfindung, einen neuen Elektromotor bereit zu stellen.

Nach der Erfindung wird diese Aufgabe gelöst durch einen Motor gemäß Anspruch 1. Dementsprechend ist die Verbindung der Wicklungsenden der Einzelwicklungen mit den Befestigungselementen der zugeordneten Verbindungselemente in einfacher Weise möglich, z.B. mittels Widerstandsschweißen, wodurch man niedrige Übergangswiderstände erhält. Die Verbindungselemente können ihrerseits durch eine funktionsadäquate Verbindungsanordnung in der gewünschten Weise elektrisch verbunden werden, z.B., um eine Stern-Doppelparallel-Schaltung oder eine Dreieck-Vierfachparallel-Schaltung zu erhalten.

Die Erfindung ermöglicht so eine rasche, unkomplizierte und hochgradig automatisierte Fertigung von Statoren hoher Qualität, welche bei hohen Umgebungstemperaturen und/oder hohen Stromstärken und/oder einer starken Beanspruchung durch Vibrationen verwendet werden können. Eine bevorzugte Anwendung sind Motoren für niedrige Betriebsspannungen, wie sie aus Sicherheitsgründen im Bergbau verwendet werden müssen, wo solche Motoren durch Vibrationen besonders stark beansprucht werden und gleichzeitig eine hohe Betriebssicherheit verlangt wird.

Weitere Einzelheiten und vorteilhafte Weiterbildungen der Erfindung ergeben sich aus den im Folgenden beschriebenen und in der Zeichnung dargestellen, in keiner Weise als Einschränkung der Erfindung zu verstehenden Ausführungsbeispielen, sowie aus den Unteransprüchen. Es zeigt:
- Fig. 1: eine übliche Darstellung eines Stators mit einer Wicklungsanordnung, sowie mit erfindungsgemäßen Verbindungselementen,
- Fig. 2: eine Darstellung analog Fig. 1, mit einer erfindungsgemäßen Verbindungsanordnung,
- Fig. 3: eine Darstellung einer Dreieck-Doppelparallel-Schaltung,
- Fig. 4: eine Darstellung eines Stators mit sechs Nuten und sechs Zähnen und der darauf angeordneten Wicklungsanordnung gemäß Fig. 1 bis 3,
- Fig. 5: eine auseinander gezogene Darstellung eines Stators mit zwölf Spulen und entsprechenden Verbindungselementen gemäß einer bevorzugten Ausführungsform der Erfindung,
- Fig. 6: eine perspektivische Darstellung eines Ausschnitts des Stators von Fig. 5 mit zwei Verbindungselementen nach Wicklung der Wicklungsanordnung.
- Fig. 7: eine perspektivische Darstellung eines Ausschnitts des Stators von Fig. 5 mit einem Verbindungselement nach Wicklung der Wicklungsanordnung im Maßstab von etwa 1:1,
- Fig. 8: eine perspektivische Darstellung des Stators von Fig. 5 nach dem Paketieren,
- Fig. 9: eine schematische Seitenansicht des fertig paketierten Stators von Fig. 8,
- Fig. 10: eine perspektivische Darstellung der Verbindungselemente von Fig. 5,
- Fig. 11: eine Darstellung, welche die Montage der oberen Platine 140 am Stator zeigt, wobei die Platine in Richtung eines Pfeiles 200 aufgepresst wird,
- Fig. 12: eine Schnittansicht durch die Darstellung von Fig. 6 entlang der Schnittlinie A-A,
- Fig. 13: die Schnittansicht von Fig. 12 mit einer beispielhaften Schweißzange zur Illustration eines Widerstandsschweißvorgangs,
- Fig. 14: eine perspektivische Darstellung eines weiteren erfindungsgemäßen Verbindungselements, wie es bei Fig. 5 und Fig. 8 bis 10 Verwendung findet,
- Fig. 15: eine Draufsicht auf eine bei der Erfindung verwendete Leiterplatte 140, und
- Fig. 16: eine schematisierte, beispielhafte Darstellung der Leiterbahnen in der Leiterplatte 140 der Fig. 15.

In der nachfolgenden Beschreibung beziehen sich die Begriffe links, rechts, oben und unten auf die jeweilige Zeichnungsfigur und können in Abhängigkeit von einer jeweils gewählten Ausrichtung (Hochformat oder Querformat) von einer Zeichnungsfigur zur nächsten varileren. Gleiche oder gleich wirkende Teile werden in den verschiedenen Figuren mit denselben Bezugszeichen bezeichnet und gewöhnlich nur einmal beschrieben.

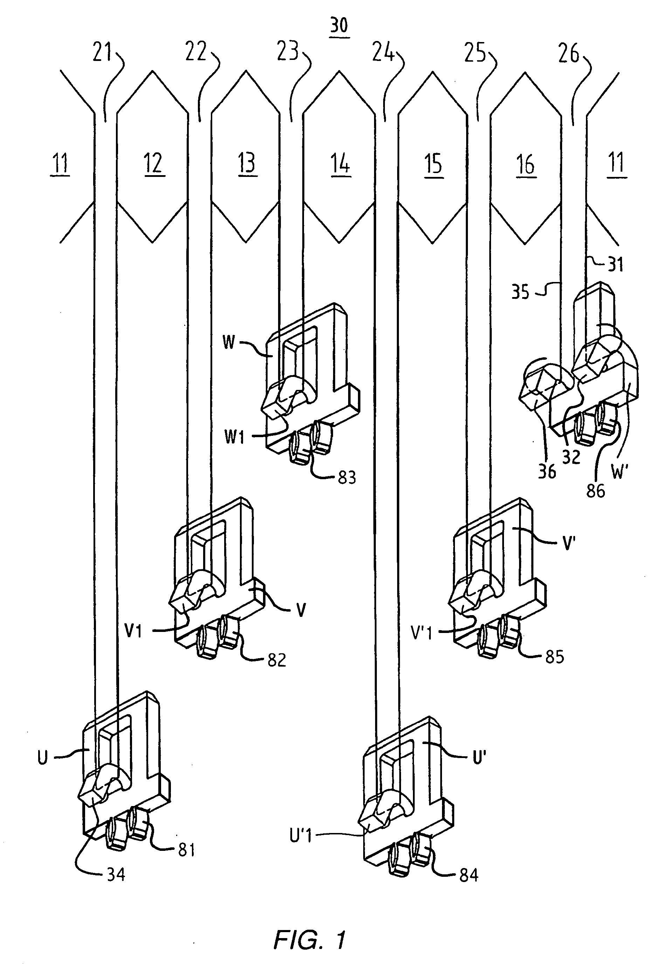

Die Fig. 1 bis Fig. 4 zeigen ein erstes Ausführungsbeispiel der Erfindung, nämlich einen Motor mit sechs ausgeprägten Statorpolen 11' bis 16', auf die sechs Spulen 11 bis 16 fortlaufend und gleichsinnig gewickelt sind. Die Nut zwischen den Polen 11' und 12' ist mit 21 bezeichnet, die Nut zwischen den Polen 12' und 13' mit 22, und so fortlaufend die Nuten 23 bis 26.

Diese fortlaufende Wicklung 30 ist für eine Dreieck-Doppelparallel-Schaltung 28 bestimmt, wie sie in Fig. 3 in der üblichen Weise dargestellt ist.

Gemäß Fig. 1 beginnt die fortlaufende Wicklung 30 an ihrem Anfang 31 am Haken 32 eines elektrischen Verbindungselements W', geht dann zur Spule 11, deren eine Hälfte in Fig. 1 rechts und deren andere Hälfte links dargestellt ist, geht weiter zu einem Haken 34 eines Verbindungselements U, geht dann weiter zu einer Spule 12 und von dieser zu einem Haken V1 eines Verbindungselements V und von dort weiter zur Spule 13.

Von der Spule 13 geht die fortlaufende Wicklung 30 zu einem Haken W1 eines Verbindungselements W, von dort zur Spule 14, und von dieser weiter zu einem Haken U'1 eines Verbindungselements U'.

Von dort geht die fortlaufende Wicklung 30 weiter zur Spule 15, und von dieser weiter zu einem Haken V'1 eines Verbindungselements V'.

Von dort geht die fortlaufende Wicklung 30 weiter zur Spule 16, und von dort geht ihr Ende 35 zu einem Haken 36 des Verbindungselements W, womit sich der Kreis schließt, da die Haken 32 und 36 Ober das Verbindungselement W' elektrisch miteinander verbunden sind.

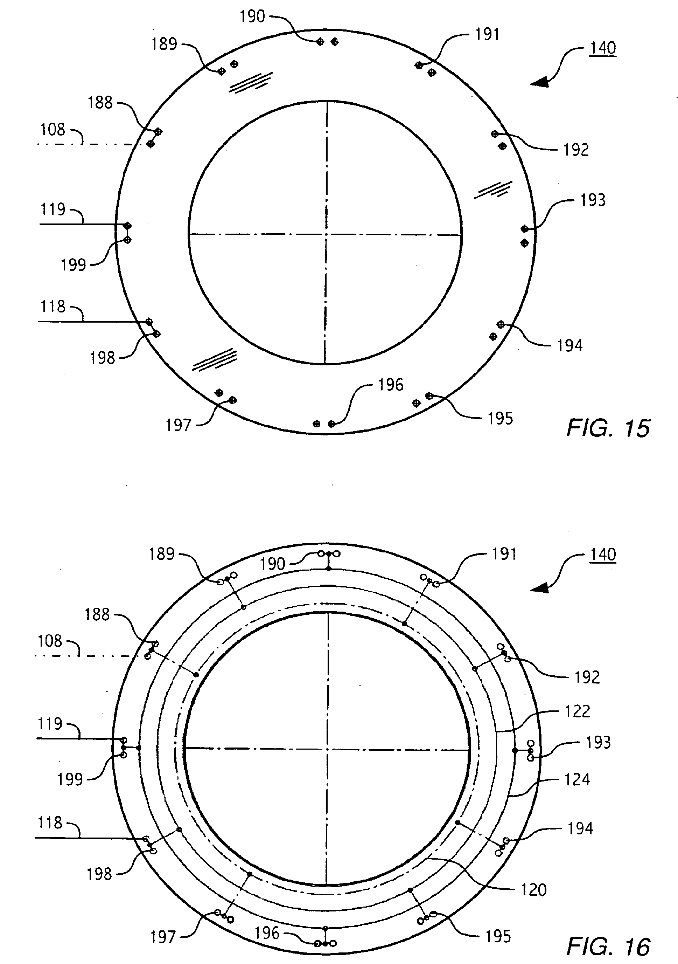

An jedem Verbindungselement U, U', V, V', W und W' ist illustrativ ein Kontaktelement 81, 82, 83, 84, 85 bzw. 86 vorgesehen. Dieses dient zur elektrischen Verbindung verschiedener Verbindungselemente, wie unten stehend bei Fig. 15 beschrieben. Die Kontaktelemente 81, 82, 83, 84, 85 bzw. 86 sind in Fig. 1 beispielhaft als federnde Einpressstifte dargestellt, wobei jedes Kontaktelement zwei solcher Einpressstifte aufweist. Die Anzahl der Einpressstifte ist hierbei abhängig von einem über diese zu übertragenden Strom, wobei generell gilt, dass bei geringen Strömen ein einzelner Einpressstift ausreichend sein kann, während bei höheren Strömen mindestens zwei Einpressstifte erforderlich sind.

Die in Fig. 1 dargestellte Anordnung ist nur ein Zwischenprodukt für die Herstellung der Dreieck-Doppelparallel-Schaltung 28 gemäß Fig. 3. Fig. 2 zeigt, wie die Schaltung Ober eine Verbindungsanordnung 40 vollends hergestellt wird. Die Verbindungsanordnung 40 hat eine Verbindung 42 zur elektrischen Verbindung der Verbindungselemente U und U' der Fig. 1 über die Kontaktelemente 81 und 84, ebenso eine Verbindung 44 zur elektrischen Verbindung der Verbindungselemente V und V' der Fig. 1 über die Kontaktelemente 82 und 85, und eine Verbindung 46 zur Verbindung der Verbindungselemente W und W' der Fig. 1 über die Kontaktelemente 83 und 86. Ein bevorzugter Aufbau der Verbindungen 42, 44, 46 wird nachfolgend beschrieben.

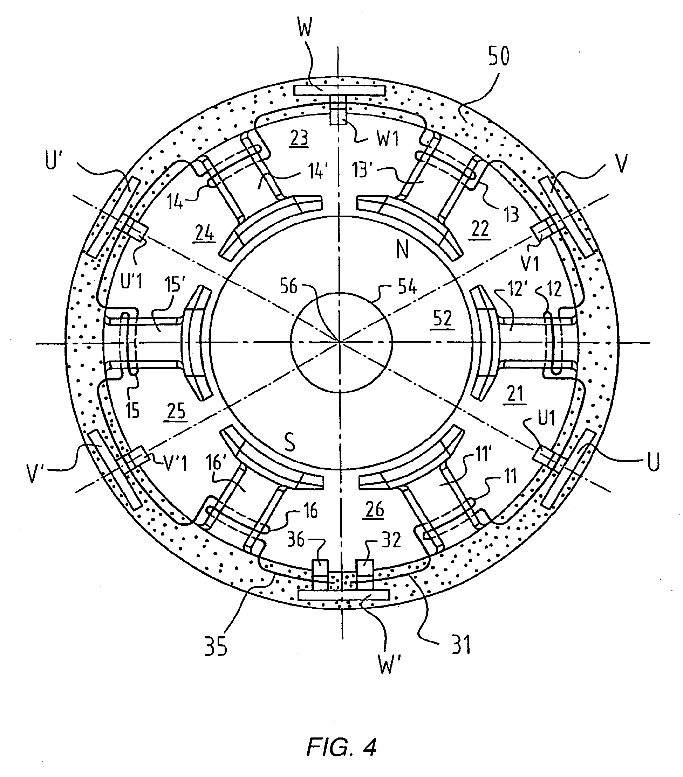

Die Verbindungselemente U, U', V, V', W und W' gemäß Fig. 1 sind an einem isolierenden Ring 50 befestigt, der in Fig. 4 durch eine Punktierung hervorgehoben ist.

Fig. 4 zeigt auch einen Rotor 52 und seine Welle 54 sowie die Drehachse 56, um die sich der Rotor 52 dreht. Dieser ist als zweipoliger Permanentmagnetrotor dargestellt, entsprechend einem Betrieb als Synchronmotor oder Drehstromgenerator, doch kann naturgemäß auch ein Rotor mit einer Kurzschlusswicklung verwendet werden, oder ein Wirbelstromrotor, um einen Betrieb als Asynchronmaschine zu ermöglichen.

Der Ring 50 liegt an einem Ende des Stators und konzentrisch zur Drehachse 56, so dass die Verbindungselemente U, U', V, V', W und W' etwa denselben Abstand von der Drehachse 56 haben.

Beispielhafte Ausgestaltungen des Motors gemäß den Fig. 1 bis 4 sind auch in der WO 2006/050765 A1 beschrieben.

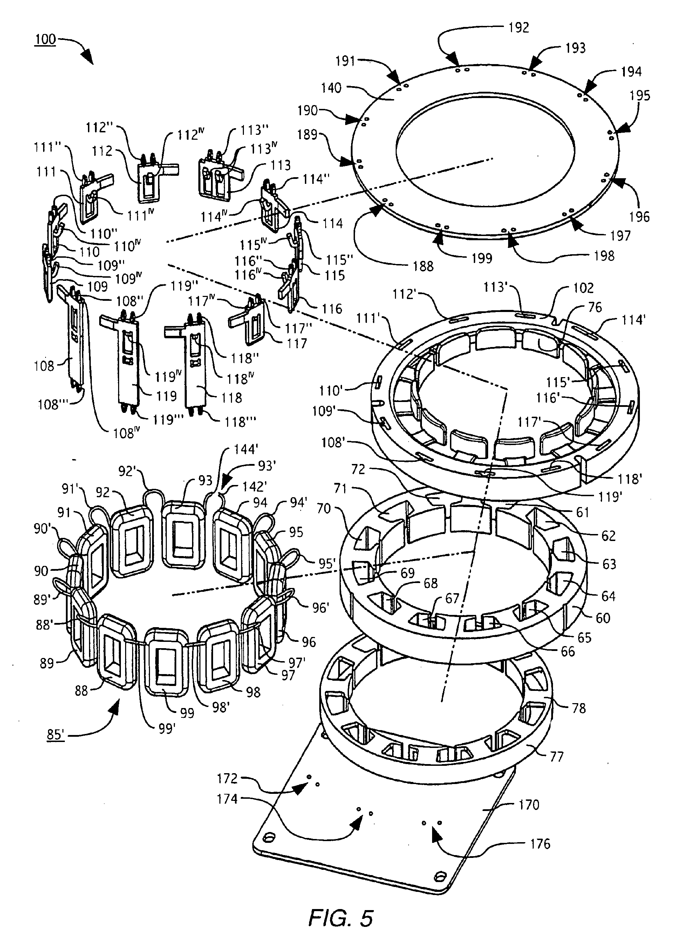

Fig. 5 zeigt eine perspektivische Explosionsdarstellung eines Stators 100 mit einem fertig paketierten Statorblechpaket 60 mit Nuten 61 bis 72, dessen Blechschnitt prinzipiell bereits bei Fig. 4 beschrieben wurde. Die Nuten 61 bis 72 des Blechpakets 60 sind in der üblichen Weise mit einem Isolator ausgekleidet.

Im Gegensatz zu Fig. 4 weist das Statorblechpaket 60 von Fig. 5 zwölf Spulen 88 bis 99 auf, mit denen dieses Blechpaket 60 bevorzugt unter Verwendung eines einzeinen Wicklungsdrahts bewickelt ist. Diese zwölf Spulen werden beispielhaft in einer Wicklungsanordnung 85' zu einer Dreieck-Vierfachparallel-Schaltung verbunden. Hierzu wird bei der Paketleren zumindest ein Teil der Spulen 88 bis 99 über entsprechende Verbindungsleitungen miteinander verbunden. In Fig. 5 sind die Spulen 88 bis 99 illustrativ über zugeordnete Verbindungsleitungen 88' bis 99' miteinander verbunden, wobei die Spulen 88 und 89 über die Leitung 88' miteinander verbunden sind, die Spulen 89 und 90 über die Leitung 89', usw.

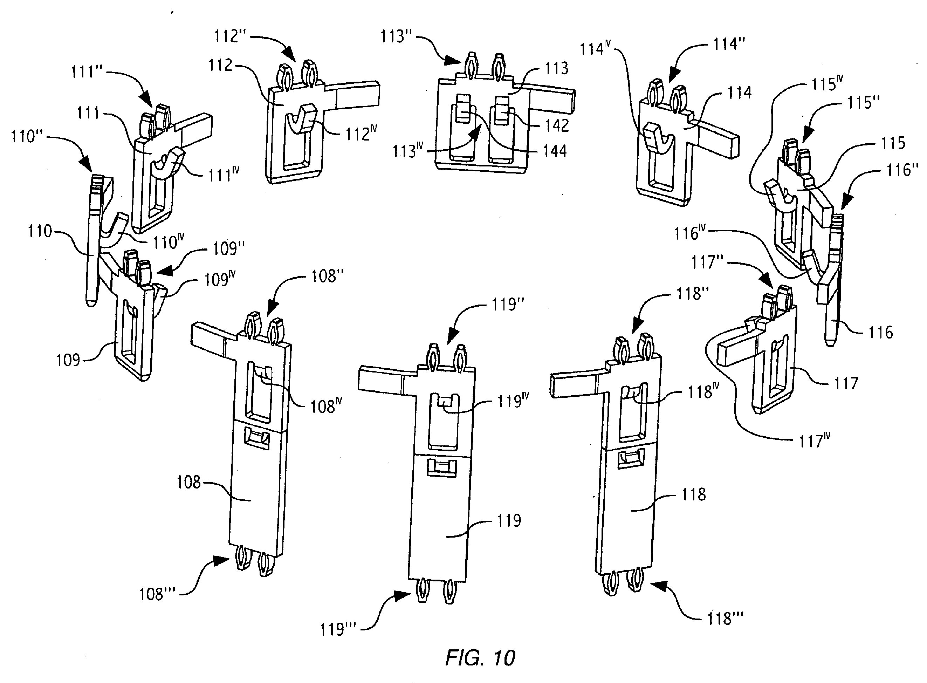

Wie aus Fig. 5 ersichtlich, ist die Verbindungsleitung 93' in etwa in der Mitte aufgetrennt und weist ein erstes Ende 142' und ein zweites Ende 144' auf. Diese werden getrennt voneinander an den beiden, das Befestigungselement 113^{IV} bildenden Haken befestigt, wie unten bei Fig.10 beschrieben.

An dem in Fig. 5 unteren Ende des Blechpakets 60 befindet sich ein ringförmiges isolierendes Formstück 77, das Teile 78 der Spulenkörper für die einzelnen Spulen bildet. An einem in Fig. 5 oberen Ende des Blechpakets 60 befindet sich ein ringförmig ausgebildeter Träger 102, an welchem ebenfalls Teile 76 der Spulenkörper für die einzelnen Spulen bzw. Einzelwicklungen vorgesehen sind. Ferner Ist der Träger 102 mit axialen Ausnehmungen 108' bis 119' zur Aufnahme von elektrischen Verbindungselementen 108 bis 119 dargestellt. Diese sind stark vergrößert in Fig. 10 illustriert.

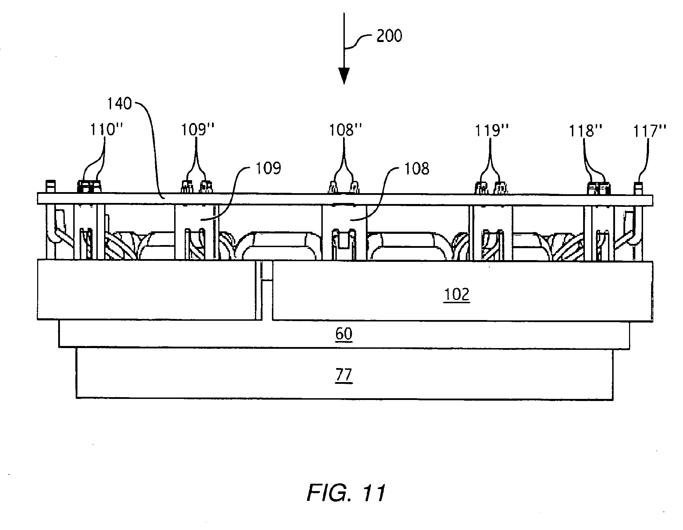

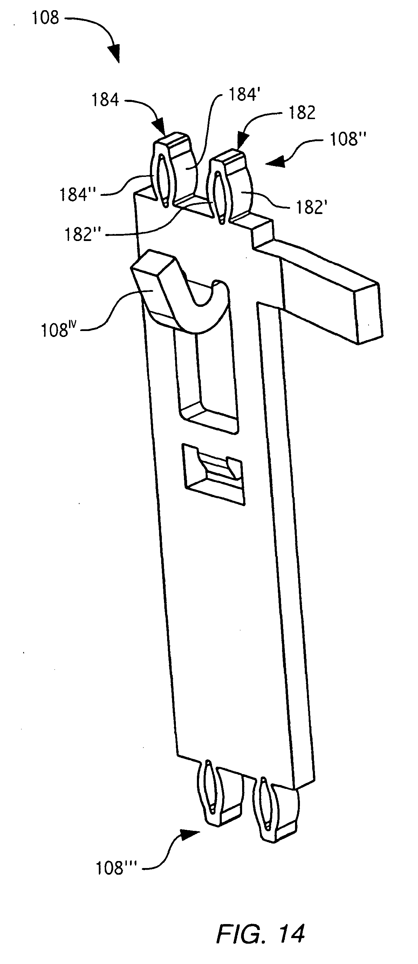

In der Ausnehmung 113' ist das mit einem Kontaktelement 113" versehene Verbindungselement 113 angeordnet, welches analog zu dem Verbindungselement W' von Fig.1 ausgebildet ist. In den Ausnehmungen 109' bis 112' sowie 114' bis 117' sind die mit Kontaktelementen 109" bis 112" sowie 114" bis 117" versehenen Verbindungselemente 109' bis 112' bzw. 114' bis 117' angeordnet, welche analog zu den Verbindungselementen U, U', V, V' und W von Fig. 1 ausgebildet sind. Eine stark vergrößerte perspektivische Ansicht des Verbindungselements 114 ist beispielhaft in FIG. 11 illustriert. In den Ausnehmungen 108', 118' und 119' sind die mit den Kontaktelementen 108", 118" bzw. 119" versehenen Verbindungselemente 108, 118 bzw. 119 angeordnet. Eine stark vergrößerte perspektivische Ansicht des Verbindungselements 108 ist beispielhaft In FIG. 14 illustriert.

Die Kontaktelemente 108" bis 119" werden bei der Montage in zugeordnete Aufnahmeelemente 188 bis 199 einer bevorzugt als Leiterplatine ausgebildeten Verbindungsanordnung 140 eingeführt, um dort mit entsprechenden elektrischen Leitern wie bei Fig. 15 beschrieben verbunden zu werden.

Die Aufnahmeelemente 188 bis 199 sind bevorzugt als Presssitze ausgebildet, in die die entsprechenden Einpressstifte eingepresst werden. Hierdurch wird eine stabile, zugfeste Verbindung der Kontaktelemente 108" bis 119" zu der Verbindungsanordnung 140 hergestellt, welche z. B. zur elektrischen Verbindung von unterschiedlichen Spulen zur Herstellung der Dreieck-Vierfachparalfel-Schaltung des Stators 100 dient.

Wie aus Fig. 5 ersichtlich, weisen die Verbindungselemente 108, 118 und 119 an ihrer in Fig. 5 - unteren Seiten zusätzliche Kontaktelemente 108"', 118"' bzw. 119"' auf. Diese dienen zur elektrischen Verbindung der Wicklungsanordnung 85' mit einer Versorgungsspannungsquelle (z.B, einem Drehstromnetz oder einer Endstufe) Ober eine weitere als Leiterplatte ausgebildete Verbindungsanordnung 170, auf der auch andere elektronische Bauteile der Motorelektronik angeordnet sein können. Analog zu den Kontaktelementen 108" bis 119" sind die Kontaktelemente 108"', 118"' und 119"' als Einpressstifte ausgeführt, welche in als Presssitze ausgeführte Aufnahmeelemente 172,174 und 176 in der Verbindungsanordnung 170 eingepresst werden. Hierdurch wird eine stabile, zugfeste Verbindung der Kontaktelemente 108"', 118"' und 119"' zu der Verbindungsanordnung 170 hergestellt.

Wie Fig. 5 zeigt, weisen die Verbindungselemente 108 bis 119 hakenförmige Befestigungselemente 108^{IV} bis 119^{IV} auf, in die die Verbindungsleitungen 88' bis 99' eingehängt sind. Die Verbindungeleltung 88' ist in den Haken 108^{IV} eingehängt, die Leitung 89' in den Haken 109^{IV}, usw. Durch Widerstandsschweißen werden die Leitungen 88' bis 99' mit den zugeordneten Haken 108^{IV} bis 119^{IV} mechanisch und elektrisch verbunden. Dies wird bei Fig. 11 bis 13 beschrieben.

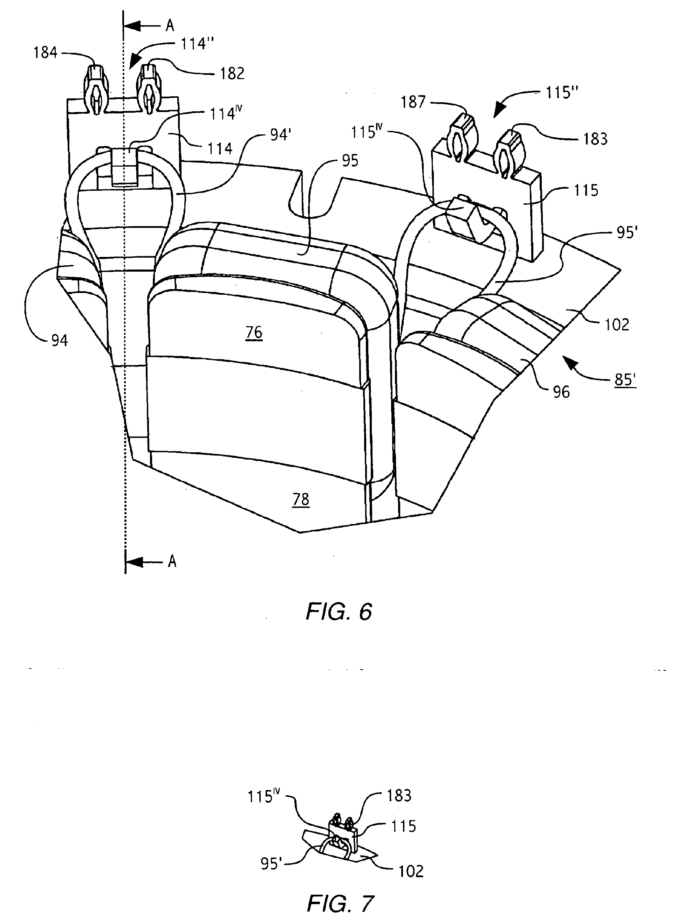

**Fig. 6** zeigt eine perspektivische Darstellung eines stark vergrößerten Ausschnitts des Stators 100 von Fig. 5 mit den Verbindungselementen 114 und 115 nach dem Wickeln der Wicklungsanordnung 85', von der in Fig. 6 nur die Einzelwicklungen 94, 95 und 96 zumindest teilweise sichtbar sind.

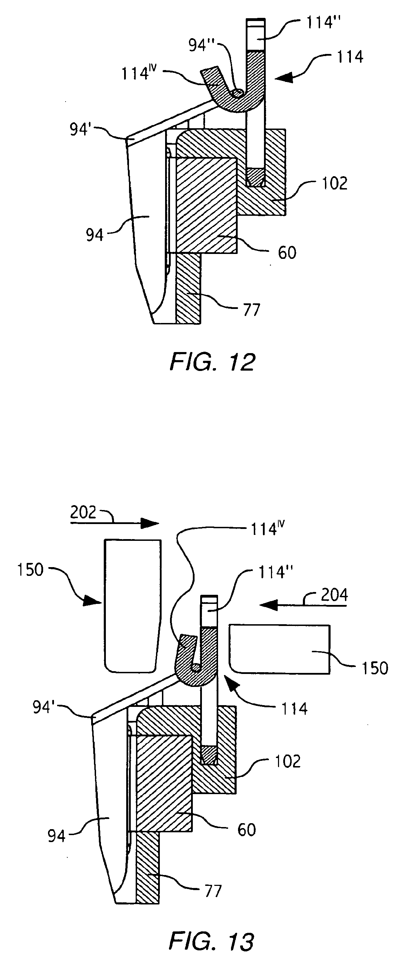

Fig. 6 verdeutlicht die Befestigung der Verbindungselemente 114 und 115 in dem Träger 102 sowie das Einhängen der Verbindungsleitungen in die betreffenden Haken der Verbindungselemente am Beispiel der Leitungen 94' und 95'. Diese sind in die Haken 114^{IV} bzw. 115^{IV} der Verbindungselemente 114 bzw. 115 eingehängt und werden mit diesen durch Widerstandsschweißen verschweißt, wie unten bei Fig. 12 und 13 beschrieben.

Fig. 6 verdeutlicht auch eine bevorzugte Ausführungsform der Kontaktelemente. Wie aus Fig. 6 ersichtlich, bestehen die Kontaktelemente 114" und 115" jeweils aus zwei federnden Einpressstiften 182 und 184 bzw. 183 und 187, die unten bei Fig. 11 im Detail beschrieben werden.

**Fig. 7** zeigt eine perspektivische Darstellung eines Ausschnitts des Stators von Fig. 6 mit dem Verbindungselement 115 nach dem Wickeln und im Maßstab von etwa 1:1.

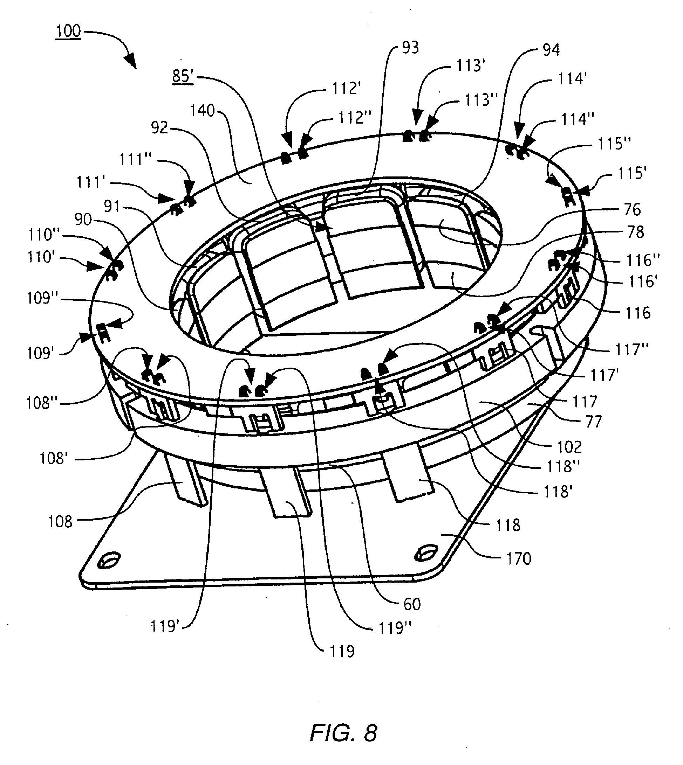

**Fig. 8** zeigt eine perspektivische Darstellung des fertig montierten Stators 100 der Fig. 5.

Fig. 8 verdeutlicht die Befestigung der Verbindungsanordnung 140 an den Verbindungselementen 108 bis 119 über die in den zugeordneten Aufnahmeelementen 108' bis 119' angeordneten Kontaktelemente 108" bis 119". Fig. 8 zeigt auch die Befestigung der Verbindungsanordnung 170 an den Verbindungselementen 108, 118 und 119 über die in den zugeordneten Aufnahmeelementen 172, 174 und 176 (nicht sichtbar) angeordneten Kontaktelemente 108"', 118" bzw. 119"' (nicht sichtbar).

Zur Herstellung des Stators 100 werden zunächst der Träger 102, das Statorblechpaket 60 und das ringförmige Formstück 77 übereinander angeordnet und die Verbindungselemente 108 bis 119 werden im Träger 102 befestigt. Dann wird die Wicklungsanordnung 85' gewickelt, wobei die Verbindungsleitungen 88' bis 99' zwischen den einzelnen Spulen 88 bis 99 in die zugeordneten Haken 108^{IV} bis 119^{IV} eingehängt werden, vgl. Fig. 6. Anschließend werden die Leitungen 88' bis 99' mit den betreffenden Haken 108^{IV} bis 119^{IV} durch Widerstandsschweißen verschweißt, wie bei Fig. 12 und 13 beschrieben. Dann werden die Verbindungsanordnungen 140 und 170 an den Kontaktelementen 108' bis 119' bzw. 108"', 118"' und 119"' befestigt.

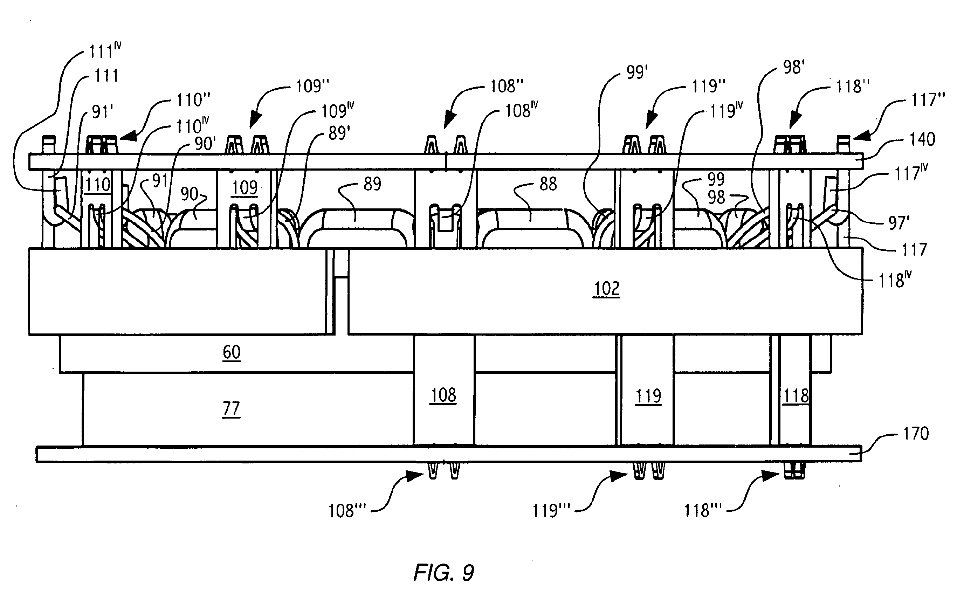

**Fig. 9** zeigt eine schematische Seitenansicht des Stators der Fig. 8 und die Befestigung der Verbindungsanordnungen 140 und 170 an den Verbindungselementen 108, 118 und 119, sowie die Befestigung der Verbindungsleitungen an deren Befestigungselementen, z. B. der Leitung 97' an dem Haken 117^{IV}.

**Fig. 10** zeigt eine perspektivische Ansicht der Verbindungselemente 108 bis 119 von Fig. 5. Eine bevorzugte Ausführungsform des Verbindungselements 114 ist stark vergrößert in Fig. 11 gezeigt und dort beschrieben. Eine bevorzugte Ausführungsform des Verbindungselements 108 ist stark vergrößert in Fig. 14 gezeigt und dort beschrieben.

Fig. 10 verdeutlicht, dass nur das Befestigungselement 113^{IV} des Verbindungselements 113 zwei Haken 142 und 144 aufweist. Wie bei Fig. 5 beschrieben, wird die Wicklungsanordnung 85' gemäß einer bevorzugten Ausführungsform der Erfindung mit einem einzelnen Wicklungsdraht gewickelt. Das Ende 142' dieses Drahtes wird vor dem Wickeln beispielsweise an dem Haken 142 befestigt. Dann werden die Spulen 94 bis 99 und 88 bis 93 von Fig. 5 gewickelt und das von der Spule 93 kommende andere Ende 144' des Wicklungsdrahts wird an dem Haken 144 befestigt. Somit schließt sich der Kreis am Haken 144, da dieser über das Verbindungselement 113 elektrisch mit dem Haken 142 verbunden ist.

Wie ebenfalls in Fig. 10 verdeutlicht, haben nur die Verbindungselemente 108, 118 und 119 untere Kontaktelemente 108"', 118"' bzw. 119"' zum Anschluss an eine entsprechende Versorgungsspannungsquelle auf, da zum Anschluss eines Dreiphasenmotors drei Anschlüsse ausreichen.

**Fig. 11** zeigt die Montage der Platine 140 durch Aufpressen auf die Kontaktelemente in Richtung eines Pfeiles 200, woran sich gewöhnlich ein Lötvorgang anschließt.

**Fig. 12** zeigt eine stark vergrößerte Schnittdarstellung des Hakens 114^{IV} mit einer darin angeordneten Verbindungsleitung 94', gesehen längs der Schnittlinie A-A der Fig. 6. Die Leitung 94' hat eine Lackisolierung 94".

**Fig. 13** zeigt eine Widerstandsschweißung, bei der die Leitung 94' mit einer Schweißzange 150, die in Richtung von zwei Pfeilen 202, 204 geschlossen wird, mit einem Haken 114^{IV} verschweißt wird. Hierzu wird die Schweißzange 150 von oben über das Element 114 geführt und anschließend horizontal an den Haken 114^{IV} herangeführt. Dieser wird mit Hilfe der Schweißzange 150 über der Leitung 94' zusammengebogen und gleichzeitig durch einen durch die Schweißzange 150 fließenden Strom erhitzt. Durch diesen Strom wird der Draht 94 erhitzt, wobei seine Isolation 94" abbrennt. Dadurch wird die Leitung 94' mit dem Haken 114^{IV} verschweißt, und es wird eine mechanisch stabile und elektrisch leitfähige Verbindung hergestellt.

**Fig. 14** zeigt eine stark vergrößerte perspektivische Ansicht des Verbindungselements 108. Diese Figur zeigt eine bevorzugte Ausbildung der Kontaktelemente als federnde Einpressstifte. Diese federnden Stifte, auch Pressfits genannt, haben jeweils zwei seitliche Biegeelemente 182' und 182" bzw. 184' und 184". Beim Einpressen der Einpressstifte 182, 184 in eine zugeordnete Öffnung der Platine 140 werden die Biegeelemente 182' und 182" bzw. 184' und 184" zusammengedrückt, d.h. die Biegeelemente 182' und 182" werden gegeneinander gedrückt, ebenso die Biegeelemente 182' und 184". Durch die federnden Bewegung der Biegeelemente in zueinander entgegengesetzten Richtungen werden die Einpressstifte 182, 184 stabil befestigt. Hierbei wird der elektrische Kontakt zu einer Leiterbahn, wie sie unten bei Fig. 15 beschrieben wird, durch die Federeigenschaft der Einpressstifte 182, 184 erzeugt und aufrechterhalten.

**Fig. 15** zeigt nochmals die Leiterplatte 140 der Fig. 5 und 8. Diese hat zwölf Aufnahmeelemente 188 bis 199 in Form vom durchkontaktierten Bohrungspaaren, in die gemäß Fig. 8 die verschiedenen Kontaktelemente 108', 108" bis 119', 119" eingepresst werden, wodurch die notwendigen elektrischen Verbindungen für die einzelnen Statorwicklungen entstehen. Ein Lötvorgang ist hierzu nicht erforderlich.

Ebenso wie in Fig. 8 wird an das Aufnahmeelement 188 das Verbindungselement 108 angeschlossen, an das Aufnahmeelement 199 das Verbindungselement 119, und an das Aufnahmeelement 198 das Verbindungselement 118. Diese Verbindungselemente sind nur symbolisch angedeutet.

**Fig. 16** zeigt schematisch die internen Verbindungen, die in der Leiterplatte 140 auf verschiedenen Ebenen vorgesehen und bevorzugt vollständig in die Leiterplatte 140 eingebettet sind.

Mit dem Anschluss 108 ist eine erste interne Ringleitung 120 verbunden, welche wie dargestellt mit den Aufnahmeelementen 188, 191, 194 und 197 verbunden ist. Diese Ringleitung 120 kann die Phase U bilden.

Mit dem Anschluss 118 ist eine zweite interne Ringleitung 122 verbunden, an welche die Aufnahmeelemente 189, 192, 195 und 198 angeschlossen sind. Diese können die Phase W bilden.

Mit dem Anschluss 119 ist eine dritte interne Ringleitung 124 verbunden, an welche die Aufnahmeelemente 190, 193, 196 und 199 angeschlossen sind. Diese können die Phase V bilden.

Die Erfindung wurde vorstehend mit Hilfe von Ausführungsbeispielen beschrieben, um dem Fachmann das Verständnis zu erleichtern. Freilich kann die Erfindung in vielfacher Weise variiert werden. Z. B. würde es bei Fig. 16 genügen; eine der drei Ringleitungen 120, 122, 124 im Inneren der Platine 140 anzuordnen. Eine zweite Ringleitung kann in diesem Fall auf der Oberseite der Platine 140 angeordnet werden, und die dritte Ringleitung wird in diesem Fall auf der Unterseite der Platine 140 angeordnet. Solche und ähnliche Modifikationen ergeben sich für den Fachmann aus den praktischen Erfordernissen, z. B. der Zahl der Phasen, der Zahl der Statorpole, und der Art der Verschaltung dieser Statorpole. Besonders vorteilhaft ist, dass ein solcher Stator weitgehend automatisiert hergestellt werden kann, weil die Wicklung, wie z.B. in Fig. 1 dargestellt, durchgehend gewickelt werden kann und die elektrischen Verbindungen mit den einzelnen Haken ebenfalls automatisch mittels Schweißzangen hergestellt werden können, worauf dann die Haken mittels der Leiterplatte 140 elektrisch in der erforderlichen Weise verbunden werden. Anstelle der Befestigung der Wicklungsdrähte durch Verschweißung der in den Haken gehaltenen Wicklungsdrähte ist auch die Verwendung von Schneid-/Klemmkontakten möglich.

## Patentansprüche

1. Elektromotor, welcher aufweist:
Einen um eine Drehachse (56) drehbaren Rotor (52);
einen diesem Rotor (52) zugeordneten Stator (60), der mit ausgeprägten Polen (11' bis 16') versehen ist, auf denen jeweils eine Wicklung (88 bis 99) vorgesehen Ist, welche Wicklungen (88 bis 99) zusammen eine Wicklungsanordnung (85') bilden;
elektrische Verbindungsleitungen (88' bis 99'), welche zwischen mindestens einem Teil dieser Wicklungen (88 bis 99) vorgesehen sind;
mindestens einen isolierenden Träger (102);
elektrische Verbindungselemente (108 bis 199), welche an diesem isolierenden Träger (102) angeordnet sind und welche mit Befestigungselementen (108"" bis 119"") versehen sind, die zur elektrischen und mechanischen Verbindung mit den Verbindungsleitungen (88' bis 99') dienen;
an den Verbindungselementen (108 bis 199) vorgesehene Einpressstifte, die als sogenannte Pressfits (182, 184) ausgebildet sind;
mindestens eine erste Verbindungsanordnung (140) und eine zweite Verbindungsanordnung (170),
wobei die erste Verbindungsanordnung mit wenigstens einem elektrischen Leiter (120, 122, 124) versehen ist und mit diesem Leiter elektrisch verbundene Aufnahmeöffnungen (188 bis 199) zur Aufnahme der Einpresstifte (108" bis 119") von mindestens zwei Verbindungselementen (108 bis 119) aufweist, um eine elektrische Verbindung von der betreffenden Verbindungsleitung (88' bis 99') über das dieser zugeordnete Befestigungselement (108"" bis 119""), das diesem zugeordnete Verbindungselement (108 bis 119), und mindestens einen an diesem Verbindungselement vorgesehenen Einpressstift (108" bis 119") zu ermöglichen und so die Verbindungselemente (108 bis 119) in der erforderlichen Weise zu verbinden, wobei die zweite Verbindungsanordnung (170) als Leiterplatte (170) ausgebildet ist und zum elektrischen Anschluss der Wicklungsanordnung (85') ausgebildet ist, und wobei mindestens ein Verbindungselement (108, 118, 119) einen ersten Einpressstift (108") und einen zweiten Einpresstift (108"') aufweist, von_denen der erste zur elektrischen Verbindung mit der ersten Verbindungsanordnung (140) und der zweite zur Verbindung mit der zweiten Verbindungsanordnung (170) ausgebildet ist.

2. Motor nach Anspruch 1, bei welchem die erste Verbindungsanordnung als Platine (140) ausgebildet ist,
und der wenigstens eine elektrische Leiter (120,122,124) als Leiterbahn der Platine (140) ausgebildet ist.

3. Motor nach Anspruch 1 oder 2, bei welchem ein Verbindungselement (108) mindestens zwei Einpresstifte (182, 184) aufweist.

4. Motor nach einem der vorhergehenden Ansprüche, bei welchem die einem Einpresstift (182, 184) zugeordnete Aufnahmeöffnung (188 bis 199) in der Verbindungsanordnung (140; 170) einen Presssitz für diesen Einpressstift (182, 184) bildet.

5. Motor nach einem der vorhergehenden Ansprüche, bei welchem zumindest ein Teil der an der Verbindungsanordnung (140; 170) vorgesehenen Verbindungselemente (108, 118, 119) auch zum elektrischen Anschluss der Wicklungsanordnung (85') an eine Versorgungsspannungsquelle ausgebildet ist.

6. Motor nach einem der vorhergehenden Ansprüche, bei welchem mindestens eine Wicklung (88 bis 99) der Wicklungsanordnung aus Draht gewickelt ist,
und das Befestigungselement (Fig. 12; 114) eines Verbindungselements derart ausgebildet ist, dass es beim Wickelvorgang ein Einlegen des Wicklungsdrahts (94") in dieses Befestigungselement ermöglicht.

7. Motor nach Anspruch 6. bei welchem der Wicklungsdraht (94',94") mit einem Befestigungselement (114) durch Widerstandsschweißen verschweißt ist (Fig. 13).

8. Motor nach einem der vorhergehenden Ansprüche, bei welchem die erste Verbindungsanordnung (140) und die zweite Verbindungsanordnung (170) räumlich voneinander getrennt sind.

9. Motor nach einem der vorhergehenden Ansprüche, bei welchem der isolierende Träger (102) am Stator (60) angeordnet ist, und bei welchem am Isolierenden Träger (50) Teile (76) der Wickelkörper für die Wicklungen des Stators (60) vorgesehen sind.

10. Motor nach einem der vorhergehenden Ansprüche, bei welchem die Wicklungen (88 bis 99) zumindest teilweise fortlaufend gewickelt sind.

11. Motor nach einem der vorhergehenden Ansprüche, bei welchem die Wicklungen (88 bis 99) gleichsinnig gewickelt sind.

12. Motor nach einem der vorhergehenden Ansprüche, welcher als dreiphasiger Motor ausgebildet ist.

13. Motor nach Anspruch 12, dessen Statorwicklung durch eine der Verbindungsanordnungen (140,170) zu einer Dreleck-Doppelparallelschaltung (28) verbunden ist.

14. Motor nach Anspruch 12, dessen Statorwicklung durch eine der Verbindungsanordnungen (140,170) zu einer Dreieck-Vierfachparallelschaltung verbunden ist.

## Claims

1. Electric motor, which has:
a rotor (52) rotatable about an axis of rotation (56);
a stator (60) assigned to this rotor (52), which stator is provided with salient poles (11' to 16'), provided respectively on which is a winding (88 to 99), which windings (88 to 99) together form a winding arrangement (85');
electrical connecting wires (88' to 99'), which are provided between at least a portion of these windings (88 to 99);
at least one insulating support (102);
electrical connecting elements (108 to 199), which are arranged on this insulating support (102) and which are provided with fastening elements (108"" to 119""), which are used for electrical and mechanical connection to the connecting wires (88' to 99');
press-in pins provided on the connecting elements (108 to 199), which pins are formed as so-called press fits (182, 184);
at least a first connecting arrangement (140) and a second connecting arrangement (170),
wherein the first connecting arrangement is provided with at least one electrical conductor (120, 122, 124) and has receiving openings (188 to 199) electrically connected to this conductor to receive the press-in pins (108" to 119") of at least two connecting elements (108 to 119), in order to facilitate an electrical connection from the relevant connecting wire (88' to 99') via the fastening element (108"" to 119"") assigned to this, the connecting element (108 to 119) assigned to this fastening element and at least one press-in pin (108" to 119") provided on this connecting element and thus to connect the connecting elements (108 to 119) in the required manner, wherein the second connecting arrangement (170) is formed as a printed board (170) and is formed for electrical connection of the winding arrangement (85'), and wherein at least one connecting element (108, 118, 119) has a first press-in pin (108") and a second press-in pin (108"'), of which the first is formed for electrical connection to the first connecting arrangement (140) and the second is formed for connection to the second connecting arrangement (170).

2. Motor according to claim 1, in which the first connecting arrangement is formed as a printed circuit board (140), and the at least one electrical conductor (120, 122, 124) is formed as a printed conductor of the printed circuit board (140).

3. Motor according to claim 1 or 2, in which a connecting element (108) has at least two press-in pins (182, 184).

4. Motor according to one of the preceding claims, in which the receiving opening (188 to 199) assigned to a press-in pin (182, 184) in the connecting arrangement (140; 170) forms a press fit for this press-in pin (182, 184).

5. Motor according to one of the preceding claims, in which at least a portion of the connecting elements (108, 118, 119) provided on the connecting arrangement (140; 170) is formed also for the electrical connection of the winding arrangement (85') to a supply voltage source.

6. Motor according to one of the preceding claims, in which at least one winding (88 to 99) of the winding arrangement is wound from wire, and the fastening element (Fig. 12: 114) of a connecting element is formed such that it facilitates an insertion of the winding wire (94") into this fastening element in the winding process.

7. Motor according to claim 6, in which the winding wire (94', 94") is welded to a fastening element (114) by resistance welding (Fig. 13).

8. Motor according to one of the preceding claims, in which the first connecting arrangement (140) and the second connecting arrangement (170) are separated spatially from one another.

9. Motor according to one of the preceding claims, in which the insulating support (102) is arranged on the stator (60), and in which parts (76) of the winding assemblies for the windings of the stator (60) are provided on the insulating support (50).

10. Motor according to one of the preceding claims, in which the windings (88 to 99) are wound at least partially continuously.

11. Motor according to one of the preceding claims, in which the windings (88 to 99) are wound in the same direction.

12. Motor according to one of the preceding claims, which is formed as a three-phase motor.

13. Motor according to claim 12, the stator winding of which is connected by one of the connecting arrangements (140, 170) to a delta double parallel connection (28).

14. Motor according to claim 12, the stator winding of which is connected by one of the connecting arrangements (140, 170) to a delta quadruple parallel connection.

## Revendications

1. Moteur électrique comprenant :
un rotor (52) pouvant tourner autour d'un axe de rotation (56) ;
un stator (60), associé à ce rotor (52) et muni de pôles saillants (11' à 16') sur lesquels un enroulement (88 à 99) est prévu à chaque fois, les enroulements (88 à 99) formant associativement un ensemble (85') d'enroulements ;
des conducteurs électriques de jonction (88' à 99'), prévus entre au moins une partie de ces enroulements (88 à 99) ;
au moins un support isolant (102);
des éléments (108 à 199) de connexion électrique, disposés sur ce support isolant (102) et pourvus d'éléments de fixation (108"" à 119"") dévolus aux liaisons électrique et mécanique avec lesdits conducteurs de jonction (88' à 99') ;
des ergots enfichables, prévus sur lesdits éléments de connexion (108 à 199) et réalisés sous la forme de pièces (182, 184) d'ajustement serré ;
au moins un premier ensemble de solidarisation (140) et un second ensemble de solidarisation (170),
ledit premier ensemble de solidarisation étant doté d'au moins un conducteur électrique (120, 122, 124), et présentant des orifices récepteurs (188 à 199) raccordés électriquement à ce conducteur et destinés à recevoir les ergots enfichables (108" à 119") d'au moins deux éléments de connexion (108 à 119), afin de permettre une connexion électrique du conducteur de jonction (88' à 99') considéré, par l'intermédiaire de l'élément de fixation (108"" à 119"") dédié à ce dernier, de l'élément de connexion (108 à 119) associé à celui-ci, et d'au moins un ergot enfichable (108" à 119") prévu sur cet élément de connexion, et pour raccorder ainsi lesdits éléments de connexion (108 à 119) de la manière souhaitée,
ledit second ensemble de solidarisation (170) étant réalisé sous la forme d'une plaquette (170) à circuits imprimés, et étant conçu pour le raccordement électrique de l'ensemble (85') d'enroulements,
et au moins un élément de connexion (108, 118, 119) comportant un premier ergot enfichable (108") et un second ergot enfichable (108"'), parmi lesquels le premier est affecté à la connexion électrique audit premier ensemble de solidarisation (140), et le second est assigné à la connexion audit second ensemble de solidarisation (170).

2. Moteur selon la revendication 1, dans lequel le premier ensemble de solidarisation est réalisé sous la forme d'une platine (140)
et le conducteur électrique (120, 122, 124), à présence minimale, est réalisé sous la forme d'une piste conductrice de ladite platine (140).

3. Moteur selon la revendication 1 ou 2, dans lequel un élément de connexion (108) compte au moins deux ergots enfichables (182, 184).

4. Moteur selon l'une des revendications précédentes, dans lequel l'orifice récepteur (188 à 199) affecté à un ergot enfichable (182, 184) forme, dans l'ensemble de solidarisation (140 ; 170), un siège d'ajustement serré destiné à cet ergot enfichable (182, 184).

5. Moteur selon l'une des revendications précédentes, dans lequel au moins une partie des éléments de connexion (108, 118, 119), prévus sur l'ensemble de solidarisation (140 ; 170), est également conçue pour le raccordement électrique de l'ensemble (85') d'enroulements à une source de tension d'alimentation.

6. Moteur selon l'une des revendications précédentes, dans lequel au moins un enroulement (88 à 99) de l'ensemble d'enroulements est bobiné à partir d'un fil métallique,
et l'élément de fixation (114, fig. 12) d'un élément de connexion est réalisé de manière à permettre, au cours de l'opération de bobinage, une insertion du fil métallique de bobinage (94") dans cet élément de fixation.

7. Moteur selon la revendication 6, dans lequel le fil métallique de bobinage (94', 94") est soudé à un élément de fixation (114) par soudage résistif (fig. 13).

8. Moteur selon l'une des revendications précédentes, dans lequel le premier ensemble de solidarisation (140) et le second ensemble de solidarisation (170) sont séparés l'un de l'autre dans l'espace.

9. Moteur selon l'une des revendications précédentes, dans lequel le support isolant (102) est disposé sur le stator (60) et dans lequel des parties (76) des corps de bobinage, dédiés aux enroulements dudit stator (60), sont prévues sur le support isolant (50).

10. Moteur selon l'une des revendications précédentes, dans lequel les enroulements (88 à 99) sont au moins partiellement bobinés en continu.

11. Moteur selon l'une des revendications précédentes, dans lequel les enroulements (88 à 99) sont bobinés dans le même sens.

12. Moteur selon l'une des revendications précédentes, réalisé sous la forme d'un moteur triphasé.

13. Moteur selon la revendication 12, dont l'enroulement statorique est raccordé, par l'un des ensembles de solidarisation (140, 170), à un double branchement (28) en parallèle, de configuration triangulaire.

14. Moteur selon la revendication 12, dont l'enroulement statorique est raccordé, par l'un des ensembles de solidarisation (140, 170), à un quadruple branchement en parallèle, de configuration triangulaire.
